## Europäisches Patentamt
## European Patent Office
## Office européen des brevets

(19)

(11) Publication number: **0 104 174**
**B1**

(12)

# EUROPEAN PATENT SPECIFICATION

(45) Date of publication of patent specification: **16.12.87**

(51) Int. Cl.⁴: **B 64 D 27/00,** F 01 B 25/16, F 16 M 13/00

(21) Application number: **82901798.7**

(22) Date of filing: **26.03.82**

(86) International application number:
**PCT/US82/00373**

(87) International publication number:
**WO 83/03396 13.10.83 Gazette 83/24**

(54) **COLLAPSIBLE COWL STRUCTURE FOR GAS-TURBINE ENGINE STRUT.**

<table>
<tr><td>

(43) Date of publication of application:
**04.04.84 Bulletin 84/14**

(45) Publication of the grant of the patent:
**16.12.87 Bulletin 87/51**

(84) Designated Contracting States:
**DE FR GB NL SE**

(56) References cited:
**US-A-4 055 041**
**US-A-4 065 077**

</td><td>

(73) Proprietor: **THE BOEING COMPANY**
**P.O. Box 3707 Mail Stop 7E-25**
**Seattle Washington 98124-2207 (US)**

(72) Inventor: **MURPHY, Patrick**
**12704 Northeast 32nd**
**Bellevue, WA 98005 (US)**
Inventor: **ROUNDY, Bertan J.**
**12438 Southeast 25th Place**
**Bellevue, WA 98005 (US)**
Inventor: **WOOD, Stuart K.**
**3831-46th Southwest**
**Seattle, WA 98116 (US)**

(74) Representative: **Hoijtink, Reinoud et al**
**OCTROOIBUREAU ARNOLD & SIEDSMA**
**Sweelinckplein 1**
**NL-2517 GK Den Haag (NL)**

</td></tr>
</table>

Courier Press, Leamington Spa, England.

## Description

The invention relates to a cowl hinge support structure as defined in the preamble of claim 1. Such a support structure is generally used and for example shown in US—A—4 055 041.

One of the most recent safety improvements in gas-turbine engines has been the development of a fan case containment system, hereinafter called belt, made of strong flexible material surrounding the engine fan area. This flexible belt serves to restrain, contain and catch all flying debris which is ingested by the engine or originated from broken fan pieces which, when not restrained, could damage, cut or short out the engine fuel, oil, electrical and other supply lines causing engine fire and related disasters. The belt is made somewhat similar to the construction of a bullet proof vest, utilizing layers of tough, flexible Kevlar material or the like and capable of restraining or containing most of the free flying objects.

Because of the deflection of the flexible belt, occurring in case a free flying object is captured, a portion of the structure of the strut, especially a portion lying within a maximum belt deflection envelope, might become damaged in such a way, that this would provide a new safety risk.

The invention has for its object to provide a cowl hinge support structure which is adapted to the use of a flexible containment belt and further reduces the safety risks due to free flying objects in the fan area.

According to the invention this is achieved with a cowl hinge support structure as characterized in the characterizing part of claim 1. Therefore, the present invention provides for

1) a system interface, which clears the maximum belt deflection envelope, and

2) a collapsible right and left fan cowl support hinge structure which is capable of moving outward, to at least clear the maximum belt deflection envelope, and thereby protect the strut structure from rupture or upset.

## Summary of the Invention

The airplane strut structure which supports the engine includes a cowl hinge structure. In general, the engine cowlings are hingedly attached to the right and to the left side of the cowl hinge structure. The present invention provides for a safety collapsible cowl hinge structure in the area of the engine fan so that upon fan belt deflection, due to fan blade failings or other debris, the deflection will not cause damage to structural areas carrying fuel and electrical conduits, but the deflection force is contained and absorbed in the nearest located cowl hinge structure due to its collapsible capability.

The cowl hinge structure is partly located within the maximum deflection envelope of the fan protection belt, which location approximately coincides with the forward strut-engine area. The cowl hinge structure includes a substantially horizontally positioned hinge beam which carries at each end a thereon mounted cowl hinge. The hinge beam is connected to the strut structure by a right and a left collapsible triangular structural arrangement, comprising a right and a left vertically extending beam-chord linkage between the hinge beam and the right and left strut chord. In the presently preferred configuration, each beam-chord is pivotally mounted to the hinge beam and solidly connected via a breakaway mechanical fuse arrangement to the right and left chord, respectively. The breakaway arrangement at the upper part of the linkages employs a bracket provided with a riveted, mounted locking clip, which rivets will shear and cause a disconnection at an upward force or load. In order to carry side loads to the cowling hinges during normal operation, a right and a left tension load linkage is substantially diagonally mounted between the linkage beam and the upper portion of the chord beam linkage thus forming the right and left triangular configuration. However, in order to obtain the collapsible features of the cowl hinge structure at belt deflection situations, due to debris forces as explained above, the tension linkage mountings at the hinge beam are slidably arranged while the connection to the upper portion of the beam-chord linkage is pivotally arranged. Accordingly, when a belt deflection occurs, the hinge beam will be dislocated in a substantially upward direction which causes a disconnection at the breakaway bracket connections and successively pivoting and sliding motions at the various linkage connections and thereafter a substantially realignment and repositioning of the cowl hinge structure due to the recovery or reaction forces of the temporarily upset cowling structures.

The strut structure, strut chords and the strut fairing have not been harmed, while the fairing structures between the cowling and the forward strut fairing may break away and will have to be replaced, however, such damage is insignificant in comparison to the prevented possible disaster and/or structural damage that would occur without the utilization of the herein disclosed invention.

## Description of the Drawings

FIGURE 1 illustrates an aircraft engine provided with a fan blade containment belt, and the forward strut support area adjacent the belt, which is the subject of the present invention.

FIGURE 2 is an isometric view of the forward strut support structure enclosing the collapsible cowl hinge support structure.

FIGURE 3 is a view taken on line 3—3 of Figure 2.

FIGURE 4 illustrates the event when a broken fan blade piece ruptures the engine casing and is caught by the containment belt.

FIGURE 5 is an enlarged illustration of one side of the collapsible cowl hinge structure.

FIGURE 6 is a plan view taken on line 6—6 of Figure 5.

FIGURES 7 and 8 are alternate connection arrangements for the diagonal linkage shown in Figure 5 and its possible displacement at the event shown in Figure 4.

Detailed Description of the Invention

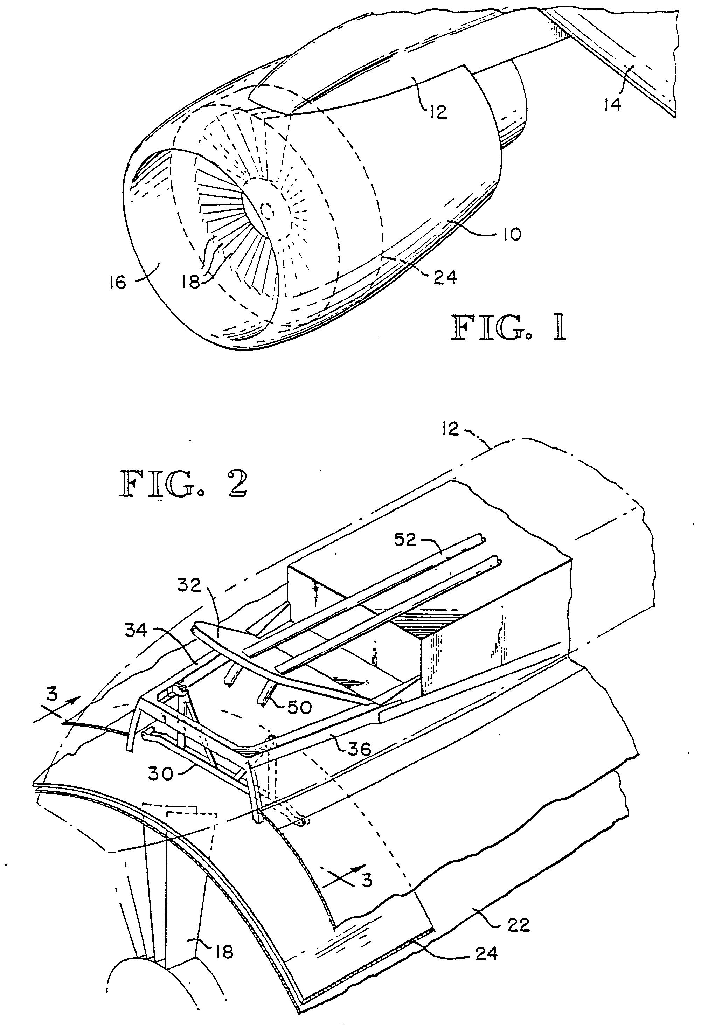

Most present day commercial aircraft are powered by gas-turbine engines 10 which are mounted by struts 12 to the wing 14, as illustrated in Figure 1. Within the engine intake area 16 is a high speed rotating fan blade assembly carrying fan blades 18.

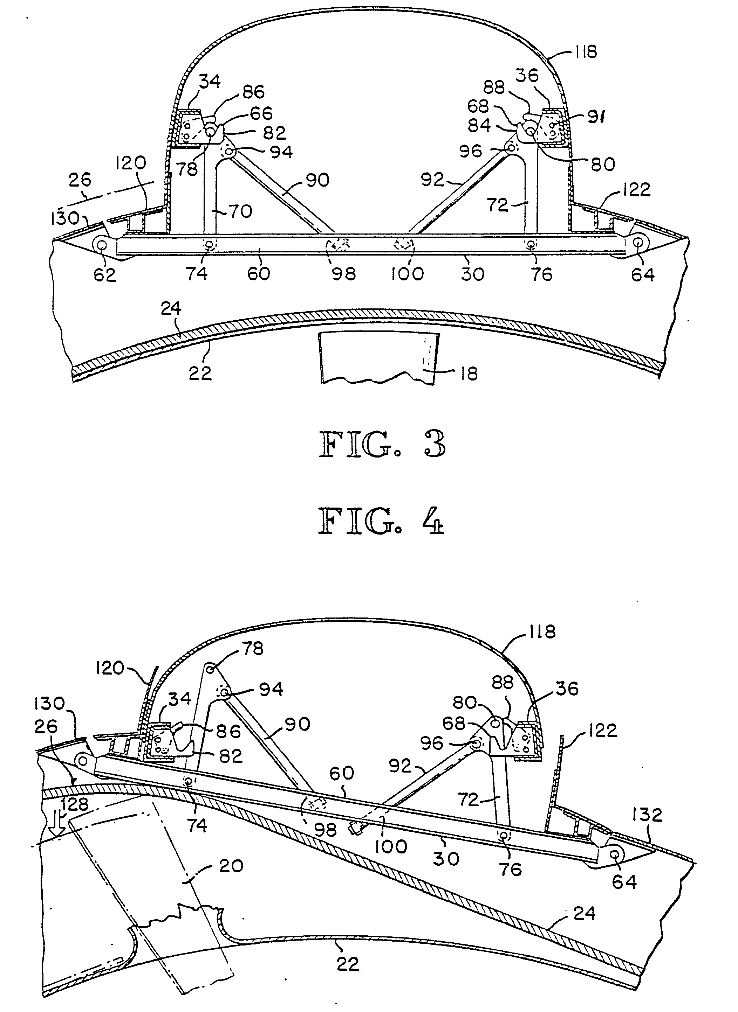

As explained above, failure of fan blades, broken pieces, etc., or other debris 20 may travel towards the engine casing 22 when subjected by centrifugal forces and penetrate the casing 22, endangering other components. For added protection a tough, expandible Kevlar type material or the like has been installed around the engine casing 22, forming a belt 24, which serves to catch and hold objects 20 which have penetrated the casing 22 as is illustrated in Figure 4. However, the maximum belt expansion or deflection envelope 26 intersects with the cowl hinge structure 30.

Referring to Figures 2 and 3, the cowl hinge structure 30 is adjacent engine fuel 50 conduits, oil conduit 52 and other hydraulic or electrical connections which, via the conventional fire wall 32, bypass the structure 30 towards other engine locations (not shown). As will be understood, upset or dislocation of a conventional cowl hinge support structure which was integrally connected with the strut structure 12 would cause immediate danger through severed fuel and shorted electrical conduits. Accordingly, the presently disclosed cowl hinge structure 30 has been made collapsible and thus may become independent of the strut structure 12 and its main support chords 34 and 36, as illustrated in Figure 4.

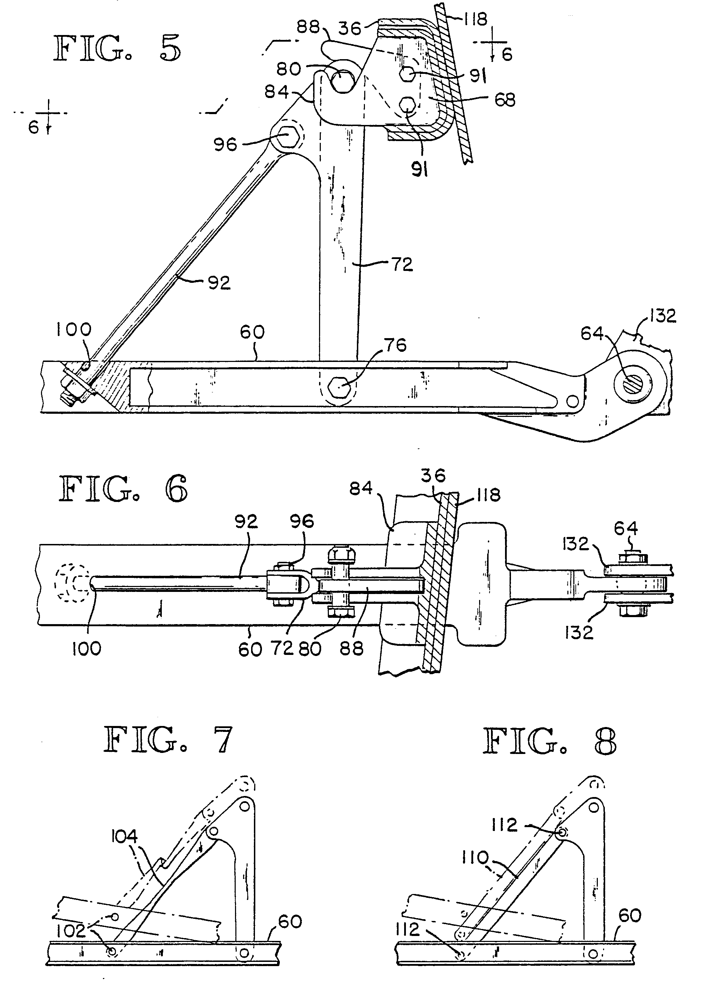

The collapsible cowl hinge structure 30 comprises a horizontally positioned hinge beam 60 carrying a left and a right cowl hinge 62 and 64. The beam 60 is mounted to the strut chords 34 and 36 by a breakaway means or mechanical fuse arrangement 66 and 68. The particular arrangement may be accomplished many different conventional ways, however, the preferred arrangement is shown in Figures 2—6 and in detail in Figures 5 and 6. The beam-chord linkages 70 and 72 are pivotally connected to the beam 60 by bolts 74—76 and at their upper ends by bolts 78—80, kept within brackets 82 and 84 and clips 86 and 88. The clip 86 or 88 is riveted by rivets 91, which will shear when an upwards directed load occurs, thus disconnecting the beam-chord linkage 70 or 72 from the strut structure 12. Diagonally positioned tension load linkages 90 and 92 are pivotally mounted to the upper portion of the beam-chord linkage and are slidably mounted to the beam at the openings 98 and 100. Upon collapsing action, the tension load linkages 90 and 92 may travel through the beam openings 98 and 100 as illustrated in Figure 4.

In a different embodiment as illustrated in Figure 7, the connection to the beam 60 is made via a bolt 102, and the tension linkage 104 is made of a thin, foldable tension load material so that the linkage 104 may fold upon action and unfold due to the cowling reaction repositioning forces.

The embodiment shown in Figure 8 comprises a sturdier diagonal tension linkage 110 which is connected to the beam 60 at one or both ends by a breakway or mechanical fuse bolt 112 which will shear at a predetermined load.

It should be understood that the maximum deflection envelope 26 as illustrated in Figure 4, where the belt hits the beam at the hinge 62 is just an exemplary showing. The point of impact may occur anywhere along the length of the beam 60. Also, it should be noted that the strut fairing 118, the strut chords 34 and 36 remain in their original location, since they are being part of the strut structure 12. The fairing structures 120 and 122 will become folded and damaged and will have to be replaced. The reaction load 128 which is due primarily to the upset of the cowl hinge 62 and/or 64 and its thereon connected cowling structures 130 and/or 132, will reposition the collapsed cowl hinge structure 30, as a moveable mechanism, into the approximate original position as shown in Figure 3. Engine out situations may be prevented by the herein disclosed invention, which may improve the safety of aircraft operation. It should be understood that the herein disclosed and described invention is illustrated as an example only and in its preferred embodiment, and furthermore that various changes could be affected which would provide an increased energy absorption in the collapsible structure arrangement 30 or would collapse or reposition the cowl hinge structure 30 in a slightly different mode, however, it is intended that such changes and modifications are within the present invention as claimed hereinafter.

## Claims

1. A cowl hinge support structure for a strut supported gas-turbine engine (10), comprising a cowl hinge structure (30) supportedly connected to the strut (12) and a left and right side of the strut having hinge means (62, 64) each hingedly carrying a cowl portion (130, 132), characterized in that the engine is provided with a fan blade containment deflection belt (24) surrounding the engine fan area and serving to restrain free flying objects radially ejected by the engine fan (18), while deflecting within a maximum belt deflection envelope (26), said hinge structure comprising a hinge beam (60) carrying the hinge means (62, 64) and being located outside of the perimeter of said belt (24) but within said maximum belt deflection envelope, and in that a right and left support linkage (70, 72) is provided, interconnecting said hinge beam to strut associated right and left strut-chords (34, 36) by pivotal and mechanical fuse breakaway means (66, 68) so that upon deflection of said belt, said belt may contact and dislocate said beam resulting in a collapsing and disconnecting action of said support linkages whereby said cowl hinge structure becomes disconnected from said strut-chord structure leaving said strut-chord structure undisturbed.

2. A cowl hinge support structure according to claim 1, further characterized by a right and a left tension load linkage (90, 92), each mounted to said right and left support linkage (70, 72), respectively, near said breakaway means (66, 68) and each connected to said hinge beam (60) at a spaced location from said right and from said left beam hinge means (62, 64), respectively, and whereby upon deflection of said belt (24), said deflection action may upset said beam (60) causing said breakaway means to disconnect said support linkages (70, 72) from said right and left strut-chords (34, 36).

3. A cowl hinge support structure according to claim 2, characterized in that said right and said left tension load linkages (90, 92) are each pivotally mounted to said right and said left support linkage (70, 72) near said breakaway means and wherein each said tension load linkage is connected in slidable breakaway fashion (98, 100) to said beam.

4. A cowl hinge support structure according to claim 2, characterized in that said right and said left tension load linkage (104) are each pivotally mounted to said right and said left support linkage near said breakaway means and wherein each tension load linkage (104) is connected in pivotal relationship to said beam, and upon compression load said tension linkage are adapted to fold.

5. A cowl hinge support structure according to claim 2, characterized in that said right and said left tension load linkage (110) are each pivotally mounted to said right and said left support linkage near said breakaway means and wherein each said tension load linkage (110) is pivotally connected to said beam (60) and wherein said pivotal connections (112) of said tension load linkages are such that upon compression load to said tension linkage at least one of said pivotal connections (112) is adaptable to shear.

**Patentansprüche**

1. Haubengelenktragstruktur für ein verstrebungsgehaltertes Gasturbinentriebwerk (10), umfassend eine Haubengelenkstruktur (30), die gehaltert mit der Verstrebung (12) verbunden ist, und eine linke und rechte Seite der Verstrebung, die eine Gelenkeinrichtung (62, 64) hat, von denen jede einen Haubenteil (130, 132) gelenkig trägt, dadurch gekennzeichnet, daß das Triebwerk mit einem Gebläseflügelcontainmentablenkungsband (24) versehen ist, welches den Triebwerksgebläsebereich umgibt und dazu dient, freifliegende Objekte, die durch das Triebwerksgebläse (18) radial ausgestoßen werden, zurückzuhalten, wobei es innerhalb einer maximalen Bandablenkungsumhüllung (26) ablenkt, wobei die Gelenkstruktur einen Gelenkträger (60) umfaßt, der die Gelenkeinrichtung (62, 64) trägt und außerhalb des Umfangs des Bandes (24), jedoch innerhalb der maximalen Bandablenkungsumhüllung angeordnet ist, und daß eine rechte und linke Halteverbindung (70, 72) vorgesehen ist, welche den Gelenkträger mit der verstrebungsverbundenen rechten und linken Verstrebungssehne (34, 36) mittels einer Drelagerungs- und mechanischen Sicherungswegbrecheinrichtung (66, 68) miteinander verbindet, so daß das Band beim Auslenken des Bandes den Träger kontaktieren und verrücken kann, was zu einem Zusammenklapp- und Lösungsvorgang der Halteverbindungen führt, wodurch die Haubengelenkstruktur von der Verstrebungssehnenstruktur gelöst wird und die Verstrebungssehnenstruktur umgestört bleibt.

2. Haubengelenktragstruktur nach Anspruch 1, weiter gekennzeichnet durch eine rechte und linke Spannungsbelastungsverbindung (90, 92), die je an der rechten bzw. linken Halteverbindung (70, 72) angebracht ist, und zwar in der Nähe der Wegbrecheinrichtung (66, 68), und die je mit dem Gelenkträger (60) an einer von der rechten bzw. von der linken Trägergelenkeinrichtung (62, 64) im Abstand angeordneten Stelle verbunden ist, und wodurch beim Ablenken des Bandes (24) der Ablenkungsvorgang den Träger (60) umkippen kann, so daß bewirkt wird, daß die Wegbrecheinrichtung die Halteverbindungen (70, 72) von der rechten und linken Verstrebungssehne (34, 36) löst.

3. Haubengelenktragstruktur nach Anspruch 2, dadurch gekennzeichnet, daß die rechte und die linke Spannungsbelastungsverbindung (90, 92) je drehbar an der rechten und linken Halteverbindung (70, 72) in der Nähe der Wegbrecheinrichtung angebracht sind, und daß jede Spannungsbelastungsverbindung in verschiebbarer Wegbrechweise (98, 100) mit dem Träger verbunden ist.

4. Haubengelenktragstruktur nach Anspruch 2, dadurch gekennzeichnet, daß die rechte und linke Spannungsbelastungsverbindung (104) je drehbar an der rechten und linken Halteverbindung in der Nähe der Wegbrecheinrichtung angebracht sind und daß jede Spannungsbelastungsverbindung (104) in drehbarer Beziehung mit dem Träger verbunden ist und daß die Spannungsverbindung dazu geeignet ist, bei Kompressionsbelastung zusammenzuklappen.

5. Haubengelenktragstruktur nach Anspruch 2, dadurch gekennzeichnet, daß die rechte und die linke Spannungsbelastungsverbindung (110) je drehbar an der rechten und der linken Halteverbindung in der Nähe der Wegbrecheinrichtung angebracht ist und daß jede Spannungsbelastungsverbindung (110) drehbar mit dem Träger (60) verbunden ist und daß die Drehlagerungsverbindungen (112) der Spannungsbelastungsverbindungen derart sind, daß bei Kompressionsbelastung auf die Spannungsverbindung wenigstens eine der Drehlagerungsverbindungen (112) dazu geeignet ist, abzuscheren.

**Revendications**

1. Structure support de charnières de capot pour un moteur à turbine à gaz (10) suspendu à un mât, comprenant une structure support de charnières de capot (30) qui est reliée au mât (12) et supportée par ce dernier et un côté gauche et un côté droit du mât qui possèdent des moyens formant charnières (62, 64) dont chacun supporte une partie de capot (130, 132) par une charnière, caractérisée en ce que le moteur est muni d'une ceinture flexible (24) de contention des ailettes de soufflante qui entoure la zone de soufflante du moteur et sert à retenir les objets volants libres qui sont éjectés radialement par la soufflante (18) du moteur, en fléchissant dans les limites d'une enveloppe (26) de fléchissement maximum de la ceinture, ladite structure de charnières comportant une poutre porte-charnières (60) qui porte les moyens formant charnières (62, 64) et qui est placée à l'extérieur du périmètre de ladite ceinture (24) mais à l'intérieur de l'enveloppe de fléchissement maximum de la ceinture, et en ce qu'il est prévu une biellette de support de droite et une biellette support de gauche (70, 72) qui relient ladite poutre porte-charnières aux nervures de droite et de gauche (34, 36) du mât qui sont associées au mât, par des moyens de rupture articulés et formant fusibles mécaniques (66, 68), de sorte que, en réponse au fléchissement de ladite ceinture, ladite ceinture peut entrer en contact avec ladite poutre et la déplacer, ce qui a pour effet une action de repliage et de déconnexion desdites biellettes de support, de sorte que ladite structure de charnières du capot est ainsi déconnectée de ladite structure de nervures du mât, en laissant ladite structure de nervures du mât intacte.

2. Structure support de charnières de capot selon la revendication 1, caractérisé en outre par des biellettes de traction (90, 92) de droite et de gauche, montées respectivement sur lesdites biellettes de support de droite et de gauche (70, 72), à proximité desdits moyens de rupture (66, 68) et reliées respectivement à ladite poutre porte-charnières (60) en des points espacés desdites charnières de droite et de gauche (62, 64) de la poutre, et de sorte que, en réponse au fléchissement de ladite structure (24), ladite action de fléchissement peut déplacer ladite poutre (60) en amenant lesdits moyens de rupture à détacher lesdites biellettes de support (70, 72) desdites nervures de droite et de gauche (34, 36) du mât.

3. Structure support de charnières de capot selon la revendication 2, caractérisée en ce que lesdites biellettes de traction de droite et de gauche (90, 92) sont articulées respectivement sur lesdites biellettes de support de droite et de gauche (70, 72) à proximité desdits moyens de rupture, et dans laquelle chacune desdites biellettes de traction est reliée à ladite poutre dans un mode de rupture par coulissement (98, 100).

4. Structure support de charnières de capot selon la revendication 2, caractérisée en ce que lesdites biellettes de traction de droite et de gauche (104) sont respectivement articulées sur lesdites biellettes de support de droite et de gauche à proximité desdits moyens de rupture, et dans laquelle chaque biellette de traction (104) est reliée à ladite poutre de façon articulée et lesdites biellettes de traction sont adaptées pour se plier en réponse à une contrainte de compression.

5. Structure support de charnières de capot selon la revendication 2, caractérisée en ce que lesdites biellettes de traction de droite et de gauche (110) sont montées pivotantes sur lesdites biellettes de support de droite et de gauche à proximité desdits moyens de rupture et dans laquelle chacune des biellettes de traction (110) est articulée sur ladite poutre (60), et dans laquelle lesdites liaisons articulées (112) desdites biellettes de traction sont telles qu'en réponse à une contrainte de compression appliqué auxdites biellettes de traction, au moins l'une desdites liaisons pivotantes (112) est adaptée pour se cisailler.

FIG. 1

FIG. 2

**FIG. 3**

**FIG. 4**

FIG. 5

FIG. 6

FIG. 7

FIG. 8